# EUROPÄISCHE PATENTSCHRIFT

(11) **EP 4 065 426 B1**
(45) Veröffentlichungstag und Bekanntmachung des Hinweises auf die Patenterteilung: **31.01.2024**
(21) Anmeldenummer: 20816418.6
(22) Anmeldetag: 25.11.2020
(51) Int. Cl.: B60R 22/34, B60R 22/46

(54) **GURTAUFROLLER**
SEAT-BELT RETRACTOR
ENROULEUR DE CEINTURE DE SÉCURITÉ

(30) Priorität: 26.11.2019 DE 102019218306
(43) Veröffentlichungstag der Anmeldung: 05.10.2022
(73) Patentinhaber: Autoliv Development AB, 447 83 Vårgårda (SE)
(72) Erfinder: JABUSCH, Ronald, 25336 Elmshorn (DE)
(74) Vertreter: Müller Verweyen
(86) Internationale Anmeldenummer: PCT/EP2020/083284
(87) Internationale Veröffentlichungsnummer: WO 2021/105160

(56) Entgegenhaltungen:
- EP-A1- 1 498 326
- EP-A2- 1 504 971
- WO-A1-2011/148772
- DE-A1-102018 103 289
- DE-B4-102018 103 289
- US-A1- 2001 045 483
- US-A1- 2004 108 155

## Beschreibung

Die vorliegende Erfindung betrifft einen Gurtaufroller mit den Merkmalen des Oberbegriffs von Anspruch 1.

Gurtaufroller weisen als Grundbauteile einen lasttragenden Rahmen und eine in dem Rahmen drehbar gelagerte Gurtspule auf, auf welcher ein Sicherheitsgurt aufwickelbar ist. Der Rahmen dient neben der Lagerung der Gurtspule außerdem zur Befestigung an einer Sitzstruktur oder an einer Fahrzeugstruktur und ist dafür aus einem entsprechend dicken Stahlblech hergestellt, welches zu einem U-förmigen Rahmen gebogen ist.

Fahrzeugsitze mit Sicherheitsgurteinrichtungen sind z.B. in der Verwendung als Vordersitze in Cabriolets bekannt, bei denen wenigstens die Gurtaufroller der Sicherheitsgurteinrichtungen in den Rückenlehnen der Fahrzeugsitze befestigt sind. Die Gurtaufroller werden in diesem Fall mangels einer lasttragenden B-Säule und aus Gründen des Zuganges zu den hinteren Sitzen bzw. aus Gründen der Entfernung zu der hinteren Fahrzeugstruktur bevorzugt in die Rückenlehnen der Fahrzeugsitze integriert, welche damit auch zur Aufnahme der im Rückhaltefall wirkenden Zugkräfte ausgelegt werden müssen. Die Gurtaufroller selbst weisen alle Grundbauteile eines Standardgurtaufrollers auf und werden nur mit verschiedenen, speziell für den Einbau in die Rückenlehne vorgesehenen Zusatzbaugruppen, wie z.B. einem sich selbst ausrichtenden Trägheitssensor versehen.

Der Fahrzeugsitz weist in seinem Grundaufbau eine Sitzstruktur aus mehreren lasttragenden Strukturteilen auf, welche zur Befestigung des Fahrzeugsitzes an der Fahrzeugstruktur dienen. Die Sitzstruktur ist zur Verbesserung des Sitzkomforts mit Federn und einer Polsterung versehen und dient außerdem zur Befestigung weiterer Bauteile wie z.B. verschiedene Sitzverstellmechanismen, einschließlich der zugehörigen Elektromotoren und weiterer Bauteile wie Heizeinrichtungen, Sensoren, Displays, Kopfstützen und dergleichen.

In modernen Fahrzeugen mit autonomen Fahrsystemen wird zunehmend eine vergrößerte Verstellbarkeit der Fahrzeugsitze in verschiedene Ausrichtungen und Stellungen gefordert, damit der Fahrzeuginsasse die durch das autonome Fahren gewonnenen Freiheiten z.B. zu einer vertieften Kommunikation mit den weiteren Insassen, zu verlängerten und intensiveren Ruhephasen oder auch zur Arbeit nutzen und den Fahrzeugsitz dazu entsprechend ausrichten kann. Dies hat zur Folge, dass die Sicherheitsgurteinrichtung und insbesondere der Gurtaufroller nicht mehr wie bisher an der Fahrzeugstruktur, sondern stattdessen am Fahrzeugsitz befestigt werden muss, wie dies z.B. auch schon bei den Vordersitzen von Cabriolets der Fall war.

Ferner werden Gurtaufroller in modernen Sicherheitsgurteinrichtungen mit Elektromotoren versehen, welche die Gurtwelle bei einer Aktivierung zum Beispiel zu einer reversiblen Gurtstraffung in Aufwickelrichtung antreiben. Der Elektromotor ist dabei ebenfalls an dem Rahmen befestigt und seitlich der Gurtwelle mit einer parallel zu der Drehachse der Gurtwelle ausgerichteten Antriebswelle angeordnet. Ferner ist es bekannt, zwischen der Gurtwelle und dem Elektromotor ein Getriebe vorzusehen, durch welches die Drehzahl des Elektromotors in eine vorbestimmte Drehzahl der Gurtwelle übersetzt wird. Durch die Verwendung des Getriebes wird es außerdem ermöglicht, einen möglichst kleinbauenden Elektromotor mit einer hohen Drehzahl zu verwenden. Insgesamt ergibt sich dadurch trotz der durch das Getriebe ermöglichten Verwendung des kleinbauenden Elektromotors ein Gurtaufroller mit einem vergrößerten Bauraumbedarf. Ein solcher Gurtaufroller ist z.B. aus der Druckschrift WO 03/0 99 619 A2 bekannt.

Sofern die Gurtwelle mit unterschiedlichen Drehzahlen und Drehmomenten angetrieben werden soll, müssen weitere Getriebestufen vorgesehen werden, welche den Bauraumbedarf weiter vergrößern. Ein solcher Gurtaufroller ist z.B. aus der Druckschrift DE 199 27 731 C2 bekannt.

Da die an der Sitzstruktur der Fahrzeugsitze oder auch allgemein in sehr kleinen Fahrzeugen zur Verfügung stehenden Bauräume in ihrer Größe sehr begrenzt sind und aus Designgründen nicht beliebig vergrößert werden können, ist die Anordnung eines derartigen Gurtaufrollers am Fahrzeugsitz oder auch in einem kleinen Fahrzeug grundsätzlich problematisch.

US 2001/045483 offenbart einen Gurtaufroller mit einer in einem fahrzeugfest befestigbaren Gehäuse drehbar gelagerten Gurtwelle, auf welcher ein Sicherheitsgurt aufwickelbar ist, und einem Elektromotor zum Antrieb der Gurtwelle zu einer Drehbewegung, und einem die Drehbewegung von dem Elektromotor auf die Gurtwelle übertragenden Getriebe. Eine erste Blockiereinrichtung blockiert bei einer Aktivierung wenigstens eines der Teile des Getriebes und dadurch das Getriebe aktiviert. Die erste Blockiereinrichtung ist durch einen signalgesteuerten Aktuator aktivierbar..

Vor diesem Hintergrund liegt der Erfindung die Aufgabe zugrunde, einen verbesserten Gurtaufroller mit einem Elektromotor und einem Getriebe mit einem reduzierten Bauraumbedarf zu schaffen.

Zur Lösung der Aufgabe wird ein Gurtaufroller mit den Merkmalen von Anspruch 1 vorgeschlagen. Weitere bevorzugte Weiterentwicklungen der Erfindung sind den Unteransprüchen, den Figuren und der zugehörigen Beschreibung zu entnehmen.

Gemäß dem Grundgedanken der Erfindung wird nach Anspruch 1 vorgeschlagen, dass eine erste Blockiereinrichtung vorgesehen ist, welche bei einer Aktivierung wenigstens eines der Teile des Getriebes blockiert und dadurch das Getriebe aktiviert, und die Blockiereinrichtung durch einen signalgesteuerten Aktuator aktivierbar ist, wobei der Aktuator in einer zweiten Funktion eine zweite Blockiereinrichtung bei einem Überschreiten einer vorbestimmten Auszugsbeschleunigung des Sicherheitsgurtes oder dem Überschreiten einer vorbestimmten Fahrzeugverzögerung aktiviert.

Durch das Blockieren des Teils des Getriebes über die erste Blockiereinrichtung wird das Getriebe zur Übertragung einer anderen Drehzahl bzw. einer anderen auf den Sicherheitsgurt wirkenden Zugkraft geschaltet, der Elektromotor wird darauffolgend praktisch zu einer anderen Funktion verwendet. So kann das Gurtband in einer ersten Funktion, wenn das Teil des Getriebes über die erste Blockiereinrichtung nicht blockiert ist, z.B. zum Einzug in die Parkposition nach dem Abschnallen mit einer geringen Rückzugskraft aufgewickelt werden. In diesem Fall wird von dem Sicherheitsgurt abgesehen von seinem Eigengewicht und den Reibungskräften keine zu überwindende Gegenkraft aufgebracht, und eine sehr geringe Rückzugskraft ist vollkommen ausreichend. Zur Schaltung des Getriebes wird das erste Teil des Getriebes blockiert und so der erste Kraftübertragungsweg unterbrochen, so dass die Drehbewegung anschließend nur noch unter Aktivierung des Getriebes mit einer anderen Drehzahl übertragen wird. Sofern die Drehzahl untersetzt wird, ist es z.B. möglich, den Elektromotor mit einer sehr viel höheren Drehzahl zu betreiben, und diese hohe Drehzahl dann über das Getriebe in eine geringere Drehzahl zu untersetzen, wobei aber eine sehr viel höhere Rückzugskraft z.B. zu einer reversiblen Gurtstraffung übertragen wird. Zur Schaltung des Getriebes bzw. zur Ansteuerung der ersten Blockiereinrichtung wird erfindungsgemäß ein Aktuator verwendet, welcher zusätzlich auch zu einer Ansteuerung einer zweiten Blockiereinrichtung verwendet wird, wenn eine vorbestimmte Gurtbandauszugsbeschleunigung oder Fahrzeugverzögerung detektiert wird, also zum Blockieren der Gurtwelle gemäß der gesetzlichen Anforderungen. Anders ausgedrückt wird lediglich eine weitere Blockiereinrichtung zur Schaltung des Getriebes vorgesehen, und diese weitere Blockiereinrichtung wird dann durch den bereits vorhandenen Aktuator bei einem Vorliegen eines entsprechenden Signals zur Schaltung des Getriebes aktiviert.

Vorzugsweise umfasst die erste Blockiereinrichtung eine erste Blockierklinke, welche wenigstens ein Teil des Getriebes bei einer Aktivierung durch einen Eingriff in eine erste Verzahnung des Gehäuses in Auszugsrichtung des Sicherheitsgurtes blockiert.

Ferner umfasst die zweite Blockiereinrichtung bevorzugt eine zweite Blockierklinke, welche die Gurtwelle bei einer Aktivierung durch einen Eingriff in eine zweite Verzahnung des Gehäuses in Auszugsrichtung des Sicherheitsgurtes blockiert.

Weiter wird vorgeschlagen, dass die erste und die zweite Blockiereinrichtung zwei voneinander unabhängige Steuerscheiben mit jeweils einer Steuerkontur und jeweils einer Verzahnung aufweisen, welche drehbar gelagert und mittels einer Feder in Abwickelrichtung der Gurtwelle federbelastet sind, wobei die erste und die zweite Blockierklinke an der Steuerkontur anliegen und bei dem Ausführen einer Relativbewegung der Steuerscheiben zu den Blockierklinken eine durch die Steuerkontur erzwungene Bewegung ausführen, wobei der Aktuator einen signalgesteuert auslenkbaren Blockierhebel aufweist, welcher die erste und die zweite Blockiereinrichtung durch einen Eingriff in die Verzahnungen der Steuerscheiben und einer gegen die Kraft der Feder erzwungenen Relativbewegung der Steuerscheiben aktiviert.

Insgesamt kann dadurch ein sehr kompakter Aufbau des Gurtaufrollers verwirklicht werden, bei dem ein und derselbe Aktuator zur Aktivierung beider Blockiereinrichtungen genutzt wird. Die Steuerscheibe und die beiden Blockierklinken können dabei baugleich sein, so dass in Bezug auf diese Baugruppen ein identischer Aufbau der Blockiereinrichtungen und der Steuerscheiben verwirklicht ist.

Weiter wird vorgeschlagen, dass das Getriebe durch ein Planetengetriebe gebildet ist. Planetengetriebe zeichnen sich dadurch aus, dass sie einen sehr kompakten Aufbau bei gleichzeitig hohen Untersetzungsverhältnissen ermöglichen.

In diesem Fall ist die Gurtwelle bevorzugt drehfest mit einem Planetenträger verbunden, welcher Träger von mehreren drehbar darauf gelagerten verzahnten Planetenrädern ist, und das durch die erste Blockiereinrichtung blockierbare Teil ist bevorzugt ein verzahntes Hohlrad, in welchem die Planetenräder mit ihren Verzahnungen kämmen. Das Hohlrad bildet damit das Schaltteil des Getriebes, welches im nicht blockierten Zustand gegenüber der Gurtwelle drehen kann, so dass das Getriebe als Baugruppe bzw. als Block die Antriebsbewegung ausführen kann. Die Antriebsdrehbewegung des Elektromotors wird in diesem Fall 1:1 auf die Gurtwelle übertragen. Erst durch das Blockieren des Hohlrades werden die Planetenräder aufgrund des weiter wirkenden Antriebsdrehmomentes dazu gezwungen, gegenüber dem Hohlrad zu drehen und umzulaufen. Das Getriebe wird dadurch praktisch aktiviert, und die Antriebsdrehbewegung des Elektrotors wird über die Planetenstufen in eine niedrigere Drehzahl der Gurtwelle untersetzt.

Insbesondere kann das Planetengetriebe ein mehrstufiges, vorzugsweise ein 3-stufiges Planetengetriebe sein. Durch die Mehrstufigkeit des Getriebes können weiter erhöhte Untersetzungsverhältnisse realisiert werden, ohne dass dadurch die Außenabmaße und insbesondere der Außendurchmesser des Getriebes vergrößert wird.

Dabei können die Stufen des Planetengetriebes jeweils Sonnenräder und Planetenräder mit identischen Durchmessern aufweisen. Jede Stufe weist dabei dasselbe Untersetzungsverhältnis auf, so dass in den Stufen identische Belastungsverhältnisse bei der Aktivierung des Getriebes wirken. Ferner können dadurch die Teileanzahl erhöht und die damit verbundenen Fertigungskosten je Teil reduziert werden. Außerdem kann dadurch eine kompakte Bauform des Getriebes mit mehreren Stufen mit einem identischen Außendurchmesser realisiert werden.

Weiterhin kann das Getriebe bevorzugt selbsthemmend ausgebildet sein, so dass das Getriebe bis zur Überwindung der Selbsthemmung als Block bzw. Baugruppe antreibbar ist.

Die Erfindung wird im Folgenden anhand bevorzugter Ausführungsformen unter Bezugnahme auf die beigefügten Figuren erläutert. Dabei zeigt
- Fig. 1: einen erfindungsgemäßen Gurtaufroller mit einem geschlossenen Gehäuse, und
- Fig. 2: einen erfindungsgemäßen Gurtaufroller in Explosionsdarstellung, und
- Fig. 3: einen erfindungsgemäßen Gurtaufroller in Schnittdarstellung.

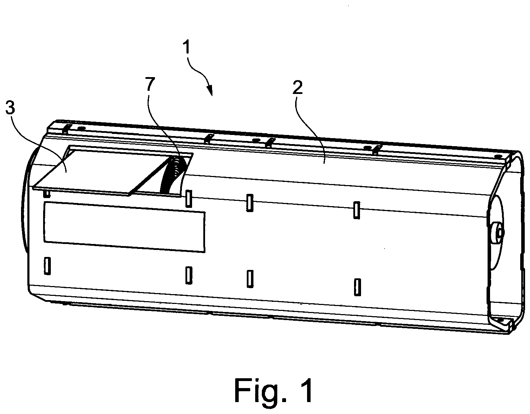

In der Figur 1 ist der erfindungsgemäße Gurtaufroller 1 mit einem zweiteiligen geschlossenen Gehäuse 2 zu erkennen. Das Gehäuse 2 weist eine Austrittsöffnung 7 aufweist, durch die sich ein Sicherheitsgurt 3 nach außen erstreckt. Der Gurtaufroller 1 ist bewusst sehr kompakt in einer langgestreckten Form ausgebildet, damit er auch in beengten Bauraumverhältnissen wie z.B. in einem oberen Abschnitt einer Rückenlehne angeordnet werden kann. Der Gurtaufroller 1 wird über das Gehäuse 2 fahrzeugfest z.B. an der Sitzstruktur befestigt, über welche dann die im Unfall auftretenden Rückhaltekräfte aufgenommen werden. Der Gurtaufroller 1 kann aber auch in anderen beengten Bauräumen des Fahrzeuges angeordnet werden, wenn dies für die Rückhaltung des Insassen günstiger oder im Sinne einer günstigeren Herstellung des Fahrzeuges von Vorteil ist. Das Gehäuse 2 ist zweiteilig aus zwei Halbschalen, mit einem geschlossenen Querschnitt rohrförmig ausgebildet und dient neben der Befestigung des Gurtaufrollers 1 an dem Fahrzeug zusätzlich zum Schutz und zur Halterung der weiteren nachfolgend noch beschriebenen Bauteile des Gurtaufrollers 1.

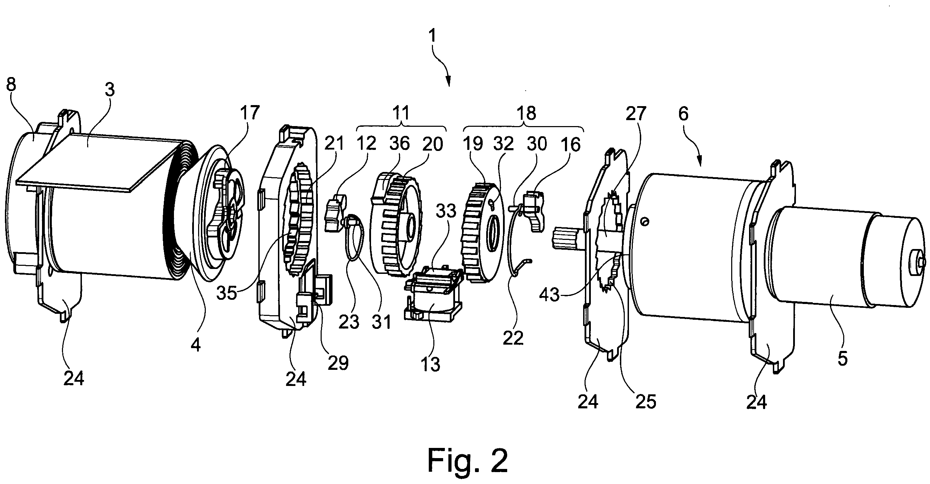

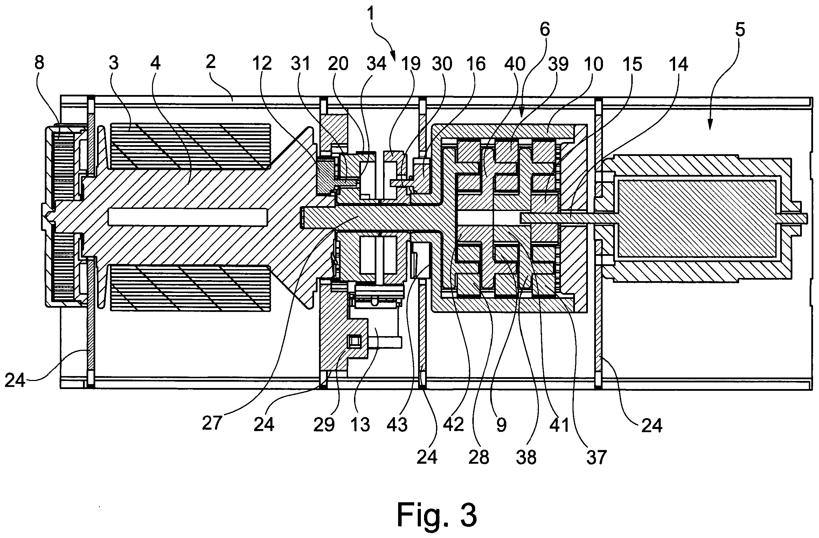

In der Figur 2 ist der Gurtaufroller 1 mit seinen Einzelteilen in Explosionsdarstellung ohne das Gehäuse 2 zu erkennen. Figur 3 zeigt den Gurtaufroller 1 mit dem Gehäuse 2 in Schnittdarstellung. Der Gurtaufroller 1 weist eine Mehrzahl von Stegen 24 auf, welche sich in dem Gehäuse 2 abstützen und zur Lagerung bzw. Halterung der Bauteile in dem Gehäuse 2 dienen. Ferner bewirken die Stege 24 eine Versteifung der gesamten Baugruppe mit dem Gehäuse 2, so dass die aufzunehmenden Kräfte günstiger aufgenommen und in die Fahrzeugstruktur eingeleitet werden können.

Der Sicherheitsgurt 3 ist auf einer Gurtwelle 4 aufgewickelt, welche von einer sich über einen der Stege 24 an dem Gehäuse 2 abstützenden Triebfeder einer Triebfederbaugruppe 8 in Aufwickelrichtung des Sicherheitsgurtes 3 federbelastet ist. Die Gurtwelle 4 weist ferner einen einstückig mit dieser ausgebildeten Profilkopf 17 auf, der Träger einer daran schwenkbar gelagerten zweiten Blockierklinke 12 ist. Ferner ist die Gurtwelle 4 beidseitig an jeweils einem Steg 24 gelagert, wobei der in der Darstellung rechte Steg 24 zusätzlich mit zwei Verzahnungen 21 und 35 versehen ist, deren Zähne jeweils in Aufwickelrichtung des Sicherheitsgurtes 3 auf der Gurtwelle 4 gerichtet sind. Ferner ist eine zweite Steuerscheibe 20 vorgesehen, welche eine nur in der Figur 3 zu erkennende Steuerkontur 34 in Form einer gekrümmten Ausnehmung und radial außen eine entgegen der Auszugsrichtung des Sicherheitsgurtes gerichtete Verzahnung aufweist. Die zweite Blockierklinke 12 greift mit einem Stift 31 in die zweite Steuerkontur 34 der zweiten Steuerscheibe 20 ein und ist dadurch bewegungstechnisch mit dieser gekoppelt. Ferner ist eine zweite Feder 23 vorgesehen, welche mit einem Ende an dem Profilkopf 17 der Gurtwelle 4 gehalten ist und mit dem anderen Ende an dem Stift 31 der zweiten Blockierklinke 12 gehalten ist. Die zweite Feder 23 ist so geformt, dass sie die zweite Blockierklinke 12 an den Profilkopf 17 heranzieht, so dass die zweite Blockierklinke 12 nicht in die Verzahnung 21 eingreift, und die Gurtwelle 4 damit nicht blockiert ist. Ferner ist die zweite Steuerscheibe 20 durch die mit dem Stift 31 in die Ausnehmung 34 eingreifende federbelastete zweite Blockierklinke zusätzlich in Abwickelrichtung des Sicherheitsgurtes 3 federbelastet. Die zweite Steuerscheibe 20 ist weiter mit einer schwenkbaren Trägheitsmasse 36 versehen, welche über eine nicht dargestellte Feder in eine an die zweite Steuerscheibe 20 herangeschwenkte Stellung federbelastet ist. Die Trägheitsmasse 36 bildet eine WS-Sensoreinrichtung und schwenkt bei einem Überschreiten einer durch die Auslegung der Feder definierten Gurtbandauszugsbeschleunigung gegenüber der zweiten Steuerscheibe 20 aus und gelangt dadurch in die Verzahnung 35 des rechten Steges 24. Durch den Eingriff in die Verzahnung 35 wird die zweite Steuerscheibe 20 gegenüber dem Gehäuse 2 und der sich drehenden Gurtwelle 4 angehalten, wodurch wiederum die zweite Blockierklinke 12 aufgrund des in die Steuerkontur 34 eingreifenden Stiftes 31 zu einer Aussteuerbewegung gezwungen wird. Durch diese Aussteuerbewegung gelangt die zweite Blockierklinke 12 zum Eingriff in die Verzahnung 21 des Steges 24, und die Gurtwelle 4 ist nachfolgend gegen eine weitere Drehung in Auszugsrichtung blockiert.

An dem Steg 24, an welchem die Verzahnungen 21 und 35 vorgesehen sind, ist ferner eine Halterung 29 für einen Aktuator 13 vorgesehen, welcher einen Blockierhebel 33 aufweist, der durch eine Bestromung des Aktuators 13 zu einer Schwenkbewegung entgegen einer Federkraft in eine ausgelenkte Stellung gezwungen wird. In der ausgelenkten Stellung greift der Blockierhebel 33 mit seiner Spitze in die Verzahnung der zweiten Steuerscheibe 20 und bewirkt dadurch ein Anhalten der zweiten Steuerscheibe 20 gegenüber der Gurtwelle 4, dem Profilkopf 17 und gegenüber der zweiten Blockierklinke 12. Die zweite Blockierklinke 12 bildet zusammen mit der zweiten Steuerscheibe 20 und der zweiten Feder 23 eine zweite Blockiereinrichtung 11, welche nach dem oben beschriebenen Ablauf aktiviert wird und die Gurtwelle 4 im aktivierten Zustand in Auszugsrichtung blockiert. Der Aktuator 13 wird in diesem Fall über ein Signal angesteuert, welches in Abhängigkeit von dem Überschreiten einer vorbestimmten Fahrzeugverzögerung erzeugt wird. Hierzu ist bevorzugt eine externe Sensoreinrichtung an der Fahrzeugstruktur vorgesehen. Diese Sensoreinrichtung wird auch als CS-Sensor bezeichnet.

Der Gurtaufroller 1 umfasst ferner einen Elektromotor 5 und ein Getriebe 6 mit einer zylindrischen Außenform. Die Gurtwelle 4, das Getriebe 6 und der Elektromotor 5 sind koaxial und in Reihe zueinander angeordnet und bilden dadurch einen länglichen Grundaufbau, dessen maximaler Außendurchmesser abgesehen von dem Gehäuse 2 durch die Gurtwelle 4 mit dem vollständig darauf aufgewickelten Sicherheitsgurt 3 definiert ist.

Der Elektromotor 5 stützt sich über einen der Stege 24 an dem Gehäuse 2 ab und weist eine axial herausgeführte Welle 14 auf. Die Welle 14 ist an ihrem Ende drehfest mit einem ersten Sonnenrad 15 verbunden, mit dem sie sich in das Getriebe 6 hinein erstreckt. Das erste Sonnenrad 15 steht in dem Getriebe 6 in einem Verzahnungseingriff mit vorzugsweise drei ersten Planetenrädern 37, die drehbar auf einem ersten Planetenträger 38 gelagert sind, an dem ein weiteres zweites Sonnenrad 41 vorgesehen ist. Das zweite Sonnenrad 41 steht in einem Verzahnungseingriff mit drei zweiten Planetenrädern 39, die auf einem zweiten Planetenträger 40 drehbar gelagert sind. An dem zweiten Planetenträger 40 befindet sich ein weiteres drittes Sonnenrad 42, das in einem Verzahnungseingriff mit einem Satz von drei weiteren dritten Planetenräder 28 steht. Die dritten Planetenräder 28 sind drehbar auf einem dritten Planetenträger 27 gelagert, welcher drehfest mit der Gurtwelle 4 verbunden ist. Die drei Planetenträger 41,42 und 27 weisen jeweils auf einem identischen Durchmesser angeordnete, axial vorstehende Zapfen auf, auf denen die Planetenräder 37,39 und 28 drehbar gelagert sind. Ferner weisen die Planetenräder 37,39 und 28 jeweils einen identischen Durchmesser und die Sonnenräder 15,41 und 42 weisen einen identischen Durchmesser auf. Die Planetenräder 37,39 und 28 kämmen an ihrer Radialaußenseite in einer Innenverzahnung eines Hohlrades 10, welches gleichzeitig ein Gehäuse für das Getriebe 6 bildet.

Das Hohlrad 10 weist radial außen eine zylindrische Mantelfläche mit einem in Axialrichtung konstanten Außendurchmesser und einem abgesetzten axialen Fortsatz 43 mit einem kleineren Außendurchmesser auf, wobei auf dem Fortsatz 43 eine erste Blockierklinke 16 schwenkbar gelagert ist. Ferner ist eine erste Steuerscheibe 19 mit einer Steuerkontur 32 in Form einer gekrümmten Ausnehmung vorgesehen, in welche die erste Blockierklinke 16 mit einem Stift 30 eingreift. Weiter ist eine Feder 22 vorgesehen, welche mit einem Ende mit dem Hohlrad 10 und dem anderen Ende mit dem Stift 30 der ersten Blockierklinke 16 verbunden ist. Die Feder ist so ausgelegt, dass sie die erste Blockierklinke 16 an das Hohlrad 10 heranzieht und dabei gleichzeitig die erste Steuerscheibe 19 in Abwickelrichtung des Sicherheitsgurtes 3 federbelastet. Das Hohlrad 10 erstreckt sich mit dem Fortsatz 43 und der ersten Blockierklinke 16 durch eine Öffnung eines Steges 24, welcher mit einer Innenverzahnung 25 versehen ist. Da die Feder 22 die erste Blockierklinke 16 an das Hohlrad 10 heranzieht, befindet sich die erste Blockierklinke 16 im entspannten Zustand der Feder 22 nicht im Eingriff in die Verzahnung 25, und das Hohlrad 10 kann frei gegenüber dem Gehäuse 2 und dem Steg 24 drehen.

Der Aktuator 13 ist so angeordnet, dass der daran vorgesehene Blockierhebel 33 bei einem Ausschwenken nicht nur in die Verzahnung der zweiten Steuerscheibe 20 einsteuert, sondern zusätzlich auch in die Verzahnung der ersten Steuerscheibe 19. Dadurch wird auch die erste Steuerscheibe 19 gegenüber einer Drehbewegung des Hohlrades 10 in Auszugsrichtung blockiert, und die erste Blockierklinke 16 wird entgegen der Kraft der Feder 22 zu einer Einsteuerbewegung in die Verzahnung 25 des Steges 24 gezwungen, wenn die erste Steuerscheibe 19 gegenüber dem Hohlrad 10 angehalten wird.

Die erste Blockierklinke 16 bildet zusammen mit der ersten Steuerscheibe 19, der Feder 22 und der Verzahnung 25 in dem Steg 24 eine erste Blockiereinrichtung 18. Die zweite Blockierklinke 12 bildet zusammen mit der Feder 23, der zweiten Steuerscheibe 20, der Trägheitsmasse 36 und den Verzahnungen 21 und 35 eine zweite Blockiereinrichtung 11. Sowohl die erste als auch die zweite Blockiereinrichtung 18 und 11 funktionieren nach demselben Prinzip der Ansteuerung des Blockiervorganges. Dabei wird zur Ansteuerung bzw. zur Auslösung des Blockiervorganges ein und derselbe Aktuator 13 verwendet, so dass ein besonders kompakter Aufbau des Gurtaufrollers 1 verwirklicht werden kann. Dabei ist der Aktuator 13 bevorzugt ein signalgesteuerter Aktuator 13, welcher durch ein extern erzeugtes elektrisches Signal angesteuert werden kann, so dass er in ein elektrisches Steuersystem des Fahrzeuges integriert werden kann. Ein solcher Aktuator 13 kann z.B. wie in dem vorliegenden Ausführungsbeispiel durch einen Elektromagneten und einen bei einer Bestromung des Elektromagneten auslenkbaren Blockierhebel 33 gebildet sein.

Der Gurtaufroller 1 kann bei einer Aktivierung des Elektromotors 5 in einer ersten Funktion nach dem Abschnallen zum Aufwickeln des Sicherheitsgurtes 3 in die Parkposition (Wickelhilfe) mit einer geringen Drehzahl von 100 bis 200 U/min und einer geringen Rückzugskraft von ca. 5 bis 30 N betrieben werden und unterstützt dabei die Triebfeder der Triebfederbaugruppe 8. Damit kann die Triebfeder in der Triebfederbaugruppe 8 mit einer sehr viel geringeren Rückzugskraft ausgelegt werden, ohne dass dadurch das funktionssichere Aufwickeln des Sicherheitsgurtes 3 riskiert werden würde. Daraus ergibt sich im Umkehrschluss, dass eine Triebfeder mit einer erheblich niedrigeren Rückzugskraft verwendet werden kann, wodurch ein erheblich größerer Tragekomfort des Sicherheitsgurtes 3 im angelegten Zustand verwirklicht werden kann. Zur Verwirklichung dieser Funktion als Wickelhilfe treibt der Elektromotors 5 das gesamte Getriebe 6 als Baugruppe an, ohne dass dabei die Bauteile des Planetengetriebes 9 in den Verzahnungen eine Relativbewegung zueinander ausführen. Das Planetengetriebe 9 wird als Block gedreht und überträgt dabei die Antriebsdrehbewegung des Elektromotors 5 in einem Übersetzungsverhältnis von 1:1 auf die Gurtwelle 4. Das Getriebe 6 ist praktisch deaktiviert.

Wird der Elektromotor 5 zur Verwirklichung einer reversiblen Gurtstraffung in einer Vorphase eines möglichen Unfalles angesteuert, so wird er durch eine höhere Bestromung zu einer Drehzahl von 5000 bis 30 000 U/min angetrieben. In diesem Fall wird die Gurtlose in einer sehr kurzen Anfangsphase wieder in dem Übersetzungsverhältnis von 1:1 herausgezogen, bis die zu überwindende Gegenkraft in dem Sicherheitsgurt 3 soweit angestiegen ist, dass eine weitere Straffung des Sicherheitsgurtgurtes 3 mit der geringen Rückzugskraft nicht mehr möglich ist. Damit wird der dritte Planetenträger 27 über die Gurtwelle 4 blockiert und kann keine weitere Drehbewegung in Einzugsrichtung ausführen. Gleichzeitig werden die an dem dritten Planetenträger 27 drehbar gelagerten Planetenräder 28 aber weiter über das dritte Sonnenrad 42 zu einer Drehbewegung angetrieben. Da die dritten Planetenräder 28 zwar noch um ihre eigenen Drehachsen drehen können, aber aufgrund des blockierten dritten Planetenträgers 27 nicht mehr umlaufen können, stützt sich das Drehmoment der dritten Planetenräder 28 an der Innenverzahnung des Hohlrades 10 ab. Damit können die dritten Planetenräder 28 die Drehbewegung nur ausführen, wenn sie das Hohlrad 10 über die Innenverzahnung zu einer Drehbewegung in Auszugsrichtung des Sicherheitsgurtes 3 antreiben. Diese Drehbewegung des Hohlrades 10 wird über die Feder 22 und die erste Blockierklinke 16 auch auf die erste Steuerscheibe 19 übertragen.

Das höhere Bestromen des Elektromotors 5 für die reversible Gurtstraffung erfolgt aufgrund eines Signals, welches durch das Sensieren einer Kenngröße erfolgt, aufgrund derer auf das Vorliegen einer Unfallvorstufe also einer Risikofahrsituation geschlossen werden kann. Dieses Signal kann dann auch zur Ansteuerung des Aktuators 13 genutzt werden, so dass der Blockierhebel 33 des Aktuators 13 bereits ausgeschwenkt ist oder unmittelbar ausgeschwenkt wird und durch Eingreifen in die Verzahnung der ersten Steuerscheibe 19 eine weitere Drehbewegung der ersten Steuerscheibe 19 gegenüber dem Hohlrad 10 in Auszugsrichtung blockiert. Dadurch wird die erste Blockierklinke 16 zu der Einsteuerbewegung in die Verzahnung 25 des Steges 24 gezwungen, und das Hohlrad 10 wird nachfolgend gegen eine weitere Drehbewegung in Auszugsrichtung des Sicherheitsgurtes 3 blockiert. Dieses Blockieren des Hohlrades 10 bewirkt dann, dass die Antriebsdrehbewegung des Elektromotors 5 anschließend nur noch dadurch weiter übertragen werden kann, wenn die Planetenträger 38,40 und 27 mit den daran drehbar gelagerten Planetenrädern 37,39 und 28 gegenüber dem Hohlrad 10 umlaufen bzw. drehen. Die Stufen des Planetengetriebes 9 werden dadurch praktisch aktiviert, und die Drehbewegung der Welle 14 von 5000 bis 30000 U/min wird in einem Untersetzungsverhältnis von i= 30 bis 80 in eine langsamere Drehzahl des dritten Planetenträgers 27 von 60 bis 10000 U/min untersetzt. Gleichzeitig wird dadurch die auf die Gurtwelle 4 und damit auf den Sicherheitsgurt 3 ausgeübte Rückzugskraft auf 150 bis 800 N erhöht. Die kurzzeitige Drehrichtungsumkehr des Hohlrades 10 bzw. der damit gekoppelten ersten Steuerscheibe 19 dient hier allein zur Auslösung der Blockierbewegung der ersten Blockierklinke 16, indem der Blockierhebel 33 in die Verzahnung der ersten Steuerscheibe 16 eingreift und die erste Steuerscheibe 19 blockiert, während die zur Auslösung der Blockierbewegung erforderliche Relativbewegung durch die fortwährende Drehung des Hohlrades 10 in Auszugsrichtung gegenüber der ersten Steuerscheibe 19 verwirklicht ist. Zur Deaktivierung des Getriebes 6 ist es ausreichend, wenn der Elektromotor 5 deaktiviert wird, und die auf den Sicherheitsgurt 3 ausgeübte Rückzugskraft sinkt, der Sicherheitsgurt 3 also praktisch wieder gelockert wird. Die erste Blockierklinke 16 gelangt durch die dadurch bewirkte Drehbewegung der Gurtwelle 4 und des Hohlrades 10 in Auszugsrichtung außer Eingriff der Verzahnung 25 des Steges 24 und das Hohlrad 10 wird wieder freigegeben.

Die erste und zweite Blockiereinrichtung 18 und 11 werden durch einen gemeinsamen Aktuator 13 aktiviert. Die Funktionen behindern sich dabei nicht gegenseitig, da die Gurtwelle 4 bei einer aktivierten ersten Blockiereinrichtung 18 während des reversiblen Gurtstraffens in Aufwickelrichtung angetrieben wird, so dass die zweite Steuerscheibe 20 ebenfalls in Einzugsrichtung dreht und die zweite Blockiereinrichtung 11 damit bewusst nicht aktiviert wird. Im umgekehrten Fall, also wenn die zweite Blockiereinrichtung 11 aktiviert wird, dreht die Gurtwelle 4 und damit über die Kopplung mit der ersten Blockierklinke 16 auch die erste Steuerscheibe 19 ebenfalls kurzzeitig in Auszugsrichtung. Dabei kann die erste Blockiereinrichtung 18 zwar aktiviert werden, eine mögliche Blockierung des Hohlrades 10 ist aber nicht nachteilhaft, da das Getriebe 6 durch die aktivierte zweite Blockiereinrichtung 11 ohnehin aus dem Kraftfluss ausgeschlossen ist.

## Patentansprüche

1. Gurtaufroller (1) mit
- einer in einem fahrzeugfest befestigbaren Gehäuse drehbar gelagerten Gurtwelle (4), auf welcher ein Sicherheitsgurt (3) aufwickelbar ist, und
- einem Elektromotor (5) zum Antrieb der Gurtwelle (4) zu einer Drehbewegung, und
- einem die Drehbewegung von dem Elektromotor (5) auf die Gurtwelle (4) übertragenden Getriebe (6),
**dadurch gekennzeichnet, dass**
- eine erste Blockiereinrichtung (18) vorgesehen ist, welche bei einer Aktivierung wenigstens eines der Teile des Getriebes (6) blockiert und dadurch das Getriebe (6) aktiviert, und
- die erste Blockiereinrichtung (18) durch einen signalgesteuerten Aktuator (13) aktivierbar ist, wobei
- der Aktuator (13) in einer zweiten Funktion eine zweite Blockiereinrichtung (11) bei einem Überschreiten einer vorbestimmten Auszugsbeschleunigung des Sicherheitsgurtes (3) oder dem Überschreiten einer vorbestimmten Fahrzeugverzögerung aktiviert.

2. Gurtaufroller (1) nach Anspruch 1, **dadurch gekennzeichnet, dass**
- die erste Blockiereinrichtung (18) eine erste Blockierklinke (16) umfasst, welche wenigstens ein Teil des Getriebes (6) bei einer Aktivierung durch einen Eingriff in eine erste gehäusefeste Verzahnung (25) in Auszugsrichtung des Sicherheitsgurtes (3) blockiert.

3. Gurtaufroller (1) nach einem der Ansprüche 1 oder 2, **dadurch gekennzeichnet, dass**
- die zweite Blockiereinrichtung (11) eine zweite Blockierklinke (12) umfasst, welche die Gurtwelle (4) bei einer Aktivierung durch einen Eingriff in eine zweite gehäusefeste Verzahnung (21) in Auszugsrichtung des Sicherheitsgurtes (3) blockiert.

4. Gurtaufroller (1) nach den Ansprüchen 2 und 3, **dadurch gekennzeichnet, dass**
- die erste und die zweite Blockiereinrichtung (18,11) zwei voneinander unabhängige Steuerscheiben (19,20) mit jeweils einer Steuerkontur und jeweils einer Verzahnung aufweisen, welche drehbar gelagert und mittels einer Feder (22,23) gegenüber der Gurtwelle (4) federbelastet sind, wobei
- die erste und die zweite Blockierklinke (16,12) an der Steuerkontur anliegen und bei dem Ausführen einer Relativbewegung zu den Steuerscheiben (19,20) eine durch die Steuerkontur erzwungene Bewegung ausführen, wobei der Aktuator (13) einen signalgesteuert auslenkbaren Blockierhebel (33) aufweist, welcher die erste und die zweite Blockiereinrichtung (18,11) durch einen Eingriff in die Verzahnungen der Steuerscheiben (19,20) und einer gegen die Kraft der Feder erzwungenen Relativbewegung der Steuerscheiben zu den Blockierklinken (16,12) aktiviert.

5. Gurtaufroller (1) nach einem der Ansprüche 1 bis 4, **dadurch gekennzeichnet, dass**
- das Getriebe (6) durch ein Planetengetriebe (9) gebildet ist.

6. Gurtaufroller (1) nach Anspruch 5, **dadurch gekennzeichnet, dass**
- die Gurtwelle (4) drehfest mit einem Planetenträger (27) verbunden ist, welcher Träger von mehreren drehbar darauf gelagerten verzahnten Planetenrädern (28) ist, und dass
- das durch die erste Blockiereinrichtung (18) blockierbare Teil ein verzahntes Hohlrad (10) ist, in welchem die Planetenräder (28) mit ihren Verzahnungen kämmen.

7. Gurtaufroller (1) nach einem der Ansprüche 5 oder 6, **dadurch gekennzeichnet, dass**
- das Planetengetriebe (9) ein mehrstufiges, vorzugsweise ein 3-stufiges Planetengetriebe ist.

8. Gurtaufroller nach Anspruch 7, **dadurch gekennzeichnet, dass**
- die Stufen des Planetengetriebes (9) Sonnenräder (15) und Planetenräder (28) mit identischen Durchmessern aufweisen.

9. Gurtaufroller (1) nach einem der Ansprüche 1 bis 7, **dadurch gekennzeichnet, dass**
- das Getriebe (6) selbsthemmend ausgebildet ist.

## Claims

1. Belt retractor (1) comprising
- a belt shaft (4) which is rotatably mounted in a housing and onto which a seat belt (3) can be wound, it being possible for the housing to be fastened to the vehicle, and
- an electric motor (5) for driving the belt shaft (4) to move rotationally, and
- a gearing mechanism (6) transmitting the rotational movement of the electric motor (5) to the belt shaft (4),
**characterized in that**
- a first blocking device (18) is provided which, when at least one of the parts of the gearing mechanism (6) is activated, blocks and thereby activates the gearing mechanism (6), and
- the first blocking device (18) can be activated by a signal-controlled actuator (13),
- the actuator (13) in a second function activating a second blocking device (11) when a predetermined pull-out acceleration of the seat belt (3) is exceeded or when a predetermined vehicle deceleration is exceeded.

2. Belt retractor (1) according to claim 1, **characterized in that**
- the first blocking device (18) comprises a first blocking pawl (16) which, when activated, blocks at least one part of the gearing mechanism (6) in the pull-out direction of the seat belt (3) by engagement in a first toothing (25) fixed to the housing.

3. Belt retractor (1) according to any of claims 1 or 2, **characterized in that**
- the second blocking device (11) comprises a second blocking pawl (12) which, when activated, blocks the belt shaft (4) in the pull-out direction of the seat belt (3) by engagement in a second toothing (21) fixed to the housing.

4. Belt retractor (1) according to claims 2 and 3, **characterized in that**
- the first and the second blocking device (18, 11) have two mutually independent control disks (19, 20), each having a control contour and a toothing, which are rotatably mounted and are spring-loaded relative to the belt shaft (4) by means of a spring (22, 23),
- the first and the second blocking pawl (16, 12) rest against the control contour and, when a relative movement to the control disks (19, 20) is performed, perform a movement forced by the control contour, the actuator (13) having a blocking lever (33) which can be deflected in a signal-controlled manner and activates the first and the second blocking device (18, 11) by engagement in the toothings of the control disks (19, 20) and a relative movement of the control disks to the blocking pawls (16, 12), which movement is forced against the force of the spring.

5. Belt retractor (1) according to any of claims 1 to 4, **characterized in that**
- the gearing mechanism (6) is formed by a planetary gearing (9).

6. Belt retractor (1) according to claim 5, **characterized in that**
- the belt shaft (4) is connected to a planetary carrier (27) in a rotationally fixed manner, which carrier is the carrier of a plurality of toothed planetary gears (28) mounted rotatably thereon, and **in that**
- the part that can be blocked by the first blocking device (18) is a toothed ring gear (10) in which the planetary gears (28) mesh with their toothings.

7. Belt retractor (1) according to any of claims 5 or 6, **characterized in that**
- the planetary gearing (9) is a multi-stage, preferably a 3-stage planetary gearing.

8. Belt retractor according to claim 7, **characterized in that**
- the stages of the planetary gearing (9) have sun gears (15) and planet gears (28) having identical diameters.

9. Belt retractor (1) according to any of claims 1 to 7, **characterized in that**
- the gearing mechanism (6) is designed to be self-locking.

## Revendications

1. Enrouleur de ceinture (1) comportant
- un arbre de ceinture (4) monté de manière à pouvoir tourner dans un boîtier pouvant être fixé de manière solidaire au véhicule, sur lequel arbre de ceinture une ceinture de sécurité (3) peut être enroulée, et
- un moteur électrique (5) destiné à entraîner l'arbre de ceinture (4) dans un mouvement de rotation, et
- un engrenage (6) transmettant le mouvement de rotation du moteur électrique (5) à l'arbre de ceinture (4),
**caractérisé en ce que**
- un premier dispositif de blocage (18) est prévu, lequel, lors d'une activation, bloque au moins l'une des pièces de l'engrenage (6) et active ainsi l'engrenage (6), et
- le premier dispositif de blocage (18) peut être activé par un actionneur (13) commandé par signal, dans lequel
- l'actionneur (13) active, dans une seconde fonction, un second dispositif de blocage (11) lors d'un dépassement d'une accélération d'extraction prédéfinie de la ceinture de sécurité (3) ou du dépassement d'une décélération de véhicule prédéfinie.

2. Enrouleur de ceinture (1) selon la revendication 1, **caractérisé en ce que**
- le premier dispositif de blocage (18) comprend un premier loquet de blocage (16) qui bloque au moins une pièce de l'engrenage (6) lors d'une activation par une mise en prise dans une première denture (25) solidaire du boîtier dans la direction d'extraction de la ceinture de sécurité (3).

3. Enrouleur de ceinture (1) selon l'une des revendications 1 ou 2,
**caractérisé en ce que**
- le second dispositif de blocage (11) comprend un second loquet de blocage (12) qui bloque l'arbre de ceinture (4) lors d'une activation par une mise en prise dans une seconde denture (21) solidaire du boîtier dans la direction d'extraction de la ceinture de sécurité (3).

4. Enrouleur de ceinture (1) selon les revendications 2 et 3,
**caractérisé en ce que**
- le premier et le second dispositif de blocage (18,11) présentent deux disques de commande (19,20) indépendants l'un de l'autre et comportant respectivement un contour de commande et respectivement une denture, lesquels disques de commande sont montés de manière à pouvoir tourner et sont sollicités par ressort vis-à-vis de l'arbre de ceinture (4) à l'aide d'un ressort (22,23), dans lequel
- le premier et le second loquet de blocage (16,12) reposent sur le contour de commande et, lors de l'exécution d'un mouvement relatif par rapport aux disques de commande (19,20), exécutent un mouvement forcé par le contour de commande, dans lequel l'actionneur (13) présente un levier de blocage (33) pouvant être dévié de manière commandée par signal, lequel levier de blocage active le premier et le second dispositif de blocage (18,11) par une mise en prise dans les dentures des disques de commande (19,20) et un mouvement relatif, forcé contre la force du ressort, des disques de commande par rapport aux loquets de blocage (16,12).

5. Enrouleur de ceinture (1) selon l'une des revendications 1 à 4,
**caractérisé en ce que**
- l'engrenage (6) est formé par un engrenage planétaire (9).

6. Enrouleur de ceinture (1) selon la revendication 5, **caractérisé en ce que**
- l'arbre de ceinture (4) est relié de manière solidaire en rotation à un support planétaire (27), lequel est le support de plusieurs roues planétaires (28) dentées montées de manière à pouvoir tourner sur celui-ci, **et en ce que**
- la pièce pouvant être bloquée par le premier dispositif de blocage (18) est une couronne dentée (10) dans laquelle les roues planétaires (28) s'engrènent avec leurs dentures.

7. Enrouleur de ceinture (1) selon l'une des revendications 5 ou 6,
**caractérisé en ce que**
- l'engrenage planétaire (9) est un engrenage planétaire à plusieurs étages, de préférence à trois étages.

8. Enrouleur de ceinture selon la revendication 7, **caractérisé en ce que**
- les étages de l'engrenage planétaire (9) présentent des roues solaires (15) et des roues planétaires (28) comportant des diamètres identiques.

9. Enrouleur de ceinture (1) selon l'une des revendications 1 à 7,
**caractérisé en ce que**
- l'engrenage (6) est réalisé de manière autobloquante.
